# EUROPÄISCHE PATENTSCHRIFT

(11) **EP 0 514 581 B1**
(45) Veröffentlichungstag und Bekanntmachung des Hinweises auf die Patenterteilung: **12.04.1995**
(21) Anmeldenummer: 91108468.9
(22) Anmeldetag: 24.05.1991
(51) Int. Cl.: B60R 22/18

(54) **Gurtstraffer für Sicherheitsgurtsysteme in Fahrzeugen**
Pretensioner for a vehicle safety belt
Tendeur de ceinture de sécurité pour véhicules

(43) Veröffentlichungstag der Anmeldung: 25.11.1992
(73) Patentinhaber: TRW Occupant Restraint Systems GmbH, 73553 Alfdorf (DE)
(72) Erfinder: Föhl, Artur, W-7060 Schorndorf (DE)
(74) Vertreter: Leiser, Gottfried, Dipl.-Ing.

(56) Entgegenhaltungen:
- EP-A- 0 305 765
- DE-A- 4 027 342
- US-A- 4 116 132

## Beschreibung

Die Erfindung betrifft einen Gurtstraffer für Sicherheitsgurtsysteme in Fahrzeugen, bei denen das Gurtschloß an einem Fahrzeugsitz angeordnet ist und der Gurtstraffer an diesem Gurtschloß angreift, mit einer fahrzeugsensitiven Sensormasse, die am Fahrzeugsitz beweglich gelagert ist, und einem durch deren fahrzeugsensitive Bewegung auslösbaren Antrieb.

Bei Anbringung eines Gurtstraffers unmittelbar an einem Fahrzeugsitz wird angestrebt, den fahrzeugsensitiven Auslösemechanismus gleichfalls am Fahrzeugsitz anzuordnen, um keine aufwendige Verkabelung zwischen dem Fahrzeugaufbau und dem relativ zu diesem verschiebbaren Fahrzeugsitz zu benötigen. Die Sensormasse des Auslösemechanismus ist aber dann nicht nur der Fahrzeugverzögerung, sondern auch Verzögerungen ausgesetzt, die bei einer etwaigen Sitzverstellung auftreten können. Unter ungünstigen Bedingungen, beispielsweise bei einer plötzlichen harten Abbremsung des Fahrzeugs, während eine Sitzverstellung durchgeführt wird und die Vorwärtsbewegung des Sitzes in seinen Führungsschienen an einer Raste abrupt gesperrt wird, kann die Auslöseschwele des fahrzeugsensitiven Auslösemechanismus überschritten und die Gurtstraffung ausgelöst werden. Der Versuch, in einem solchen Falle die Aktivierung des Gurtstraffers zu verhindern, indem die Sensormasse des Auslösemechanismus gesperrt wird, während die Handbhabe zur Sitzentriegelung betätigt wird, ist nicht immer erfolgreich, da die abrupte Verzögerung am Fahrzeugsitz auftreten kann, nachdem die Handhabe wieder freigegeben wurde.

Aus der gattungsbildenden DE-A-40 27 342 ist ein Gurtstraffer bekannt, der an einem am Fahrzeugsitz angeordneten Gurtschloß angreift und eine am Fahrzeugsitz beweglich gelagerte fahrzeugsensitive Sensormasse aufweist, durch deren fahrzeugsensitive Bewegung ein Antrieb auslösbar ist. Dem Gurtstraffer ist eine Blockiereinrichtung zugeordnet, durch die die Bewegung der Sensormasse blockiert wird, solange keine durch Unfälle oder durch Gefahren bedingte Beschleunigungen auf die Sensormasse wirken. Diese Blockierung der Sensormasse kann durch einen fahrzeugfest montierten Hilfsbeschleunigungssensor aufgehoben werden, der auf geringere Beschleunigungswerte anspricht als der Hauptbeschleunigungssensor.

Bei einem aus der US-A-4 116 132 bekannten, zur Auslösung eines Gassack-Rückhaltesystems verwendeten Sensor ist die diesem zugeordnete fahrzeugsensitive Sensormasse durch einen federnd in eine Sperrstellung belasteten Hebel blockiert, der mit dem Einbau des Sensors in das betreffende Fahrzeug automatisch in seine Freigabestellung verschwenkt wird.

Bei einem aus der EP-A-0 305 765 bekannten Gurtstraffer ist vorgesehen, den diesem zugeordneten Trägheitskraftsensor erst bei in das Gurtschloß eingeschobener Zunge zu aktivieren und bei herausgezogener Zunge zu blockieren. In der inaktiven Stellung können Bolzen oder Riegel einen zwischen dem Trägheitskraftsensor und einem federbelasteten Zuganker vorgesehenen Sensorhebel verriegeln. Hierbei können die Bolzen oder Riegel über ein Übertragungssystem mit einem federbelasteten Betätigungsteil des Gurtschlosses verbunden sein.

Durch die Erfindung wird ein Gurtstraffer bereitgestellt, der gegen jede Fehlauslösung durch Verzögerung des Fahrzeugsitzes relativ zum Fahrzeugaufbau gesichert ist und nur dann aktiviert werden kann, wenn die Farzeugverzögerung einen vorbestimmten Wert überschreitet.

Dies wird durch die Merkmale des Anspruchs 1 erreicht. Hierbei ist die Sensormasse bis zum Auftreten eines ersten vorbestimmten Fahrzeug-Verzögerungswertes gesichert, die niedriger liegt als ein zweiter Fahrzeug-Verzögerungswert, bei dem die Auslösung des Antriebs durch die Bewegung der Sensormasse erfolgt, und bei Überschreiten des ersten Fahrzeug-Verzögerungswertes entsichert. Da die Sensormasse im normalen Betriebszustand des Fahrzeugs gesichert ist und erst dann entsichert wird, wenn - unabhängig von einer eventuellen Verzögerung des Fahrzeugsitzes relativ zu dem Fahrzeugaufbau - die Fahrzeugverzögerung einen vorbestimmten Schwellwert überschreitet, ist eine Fehlauslösung des Gurtstraffers bei einer Sitzverstellung ausgeschlossen. Zur Entsicherung der Sensormasse wird vorzugsweise ein am Fahrzeugaufbau befestigter Verzögerungssensor verwendet, und die Sensormasse wird durch eine steuerbare Verriegelungseinrichtung in ihrer gesicherten Stellung arretiert. Der Verzögerungssensor steht mit der Verriegelungseinrichtung in Wirkverbindung, um diese bei Überschreiten des vorbestimmten ersten Fahrzeug-Verzögerungswertes umzusteuern und die Sensormasse zu entsichern. Dieser Verzögerungssensor, der vorzugsweise ein am Fahrzeugaufbau zu befestigendes Gehäuse und eine darin beweglich gelagerte Sensormasse aufweist, spricht nur auf Verzögerungen des Fahrzeugaufbaus an. Im normalen Betriebszustand des Fahrzeugs ist die Sensormasse am Gurtstraffer durch die Verriegelungseinrichtung gesichert. Bei einer etwaigen Sitzverstellung bleibt sie auch dann gesichert, wenn extrem hohe Verzögerungswerte am Sitz, und folglich auch an der Sensormasse des Gurtstraffers, auftreten sollten.

Die Wirkverbindung zwischen der Verriegelungseinrichtung und der Sensormasse des Verzögerungssensors erfolgt vorzugsweise über einen Seilzug, der auch über lange Zeiträume sehr zuverlässig arbeitet, robust ist und die Herstellungskosten niedrig hält.

Weitere vorteilhafte Ausgestaltungen der Erfindung sind in den Unteransprüchen angegeben.

Eine bevorzugte Ausführungsform der Erfindung wird nun unter Bezugnahme auf die Zeichnung näher beschrieben. In der Zeichnung zeigen:
- Fig. 1: eine schematische Perspektivansicht eines an einem Fahrzeugsitz zu befestigenden Gurtstraffers und eines mit diesem über einen Seilzug verbundenen, am Fahrzeugaufbau zu befestigenden Verzögerungssensors;
- Fig. 2: eine schematische Schnittansicht, die einen Teil des Gurtstraffers und den mit diesem über einen Seilzug verbundenen Verzögerungssensor zeigt;
- Fig. 3: einen radialen Schnitt des in den Fig. 1 und 2 gezeigten Verzögerungssensors; und
- Fig. 4: einen Schnitt durch einen Verzögerungssensor einer anderen Ausführungsform.

Gurtstraffer, die an einem Fahrzeugsitz befestigt werden und am Gurtschloß eines Sicherheitsgurtsystemes angreifen, sind bekannt. Es wird daher von der Beschreibung des Sicherheitsgurtsystemes und der Fahrzeugteile, an denen der Gurtstraffer angeordnet wird, abgesehen.

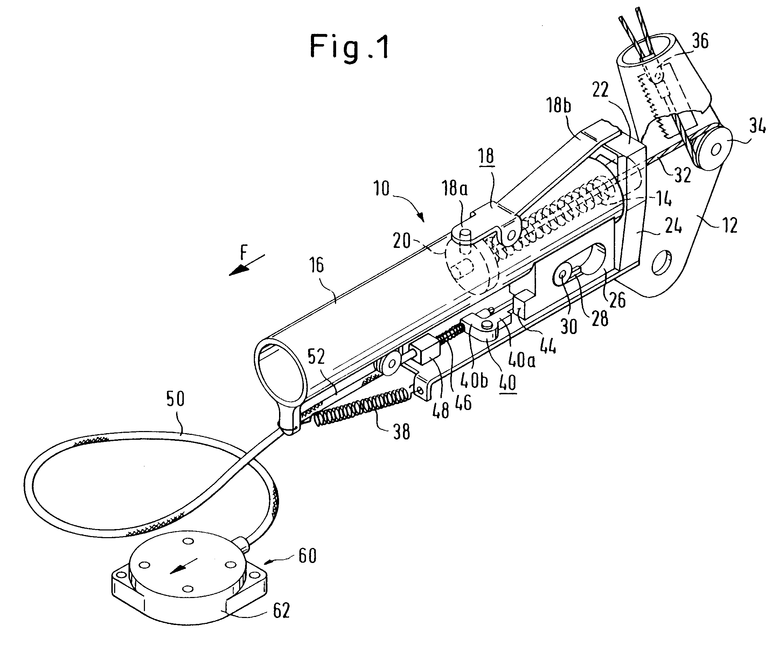

In Fig. 1 ist ein sogenannter mechanischer Gurtstraffer dargestellt, dessen Antrieb von einer gespannt gehaltenen Druckfeder abgeleitet wird. Das der Erfindung zugrundeliegende Prinzip ist jedoch auch auf Gurtstraffer anderer Art anwendbar, insbesondere solche mit pyrotechnischem Antrieb.

Der allgemein mit 10 bezeichnete Gurtstraffer ist auf einer Montageplatte 12 aufgebaut, die an dem (nicht gezeigten) Fahrzeugsitz befestigt wird. Eine gespannte Druckfeder 14 ist in einem Führungszylinder 16 aufgenommen. Durch einen am Führungszylinder 16 schwenkbar gelagerten zweiarmigen Auslösehebel 18 wird die Druckfeder 14 in ihrem gespannten Zustand gehalten. Dieser Auslösehebel 18 trägt am Ende seines ersten, kürzeren Hebelarmes 18a eine Blockiernase, die durch eine Öffnung in der Wandung des Führungszylinders 16 in dessen Inneres hineinragt und an der Stirnfläche eines Kolbens 20 angreift, der im Inneren des Führungszylinders 16 geführt ist und an dem das eine Ende der gespannten Druckfeder 14 anliegt, deren anderes Ende am Boden des Führungszylinders 16 abgestützt ist. Der zweite, längere Arm 18b des Auslösehebels 18 ist an seinem freien Ende auf einer Auflagefläche 22 eines fest mit der Montageplatte 12 verbundenen Stützteils 24 abgestützt. Mit dem Führungszylinder 16 ist ein an der Montageplatte 12 verschiebbar gelagerter Führungsblock 26 fest verbunden. Dieser Führungsblock 26 weist ein Langloch 28 auf, in das ein mit der Montageplatte 12 starr verbundener Führungszapfen 30 mit aufgesteckter Führungsrolle eingreift.

Ein am Kolben 20 verankertes Zugseil 32 ist durch eine an der Montageplatte 12 drehbar gelagerte Umlenkrolle 34 um mehr als 180° umgelenkt und mit einem Beschlagteil 36 verbunden, an welches das (nicht gezeigte) Gurtschloß des Sicherheitsgurtsystems angeschlossen ist.

Zwischen dem freien Ende des Führungszylinders 16 und dem benachbarten Ende der Montageplatte 12 ist eine Zugfeder 38 eingehängt. Der Führungszylinder 16 mit allen daran befestigten Teilen und insbesondere der darin aufgenommenen Druckfeder 14 bildet eine fahrzeugsensitive Sensormasse des Gurtstraffers. Diese ist relativ zur Montageplatte 12 linear verschiebbar gelagert. Die Richtung der Linearverschiebung dieser Sensormasse durch ihre Massenträgheit und aufgrund einer Fahrzeugverzögerung stimmt mit der normalen Fahrtrichtung überein, die in Fig. 1 durch einen Pfeil F symbolisiert ist. Dieser durch die Massenträgheit der Sensormasse induzierten Linearbewegung widersetzt sich die Zugfeder 38, welche die Auslöseschwelle des Gurtstraffers bestimmt. Wenn diese erreicht ist, beispielsweise bei einer Fahrzeugverzögerung zwischen 4 und 6 g, hat sich das freie Ende des zweiten Hebelarms 18b des Auslösehebels 18 bis über die Endkante der Auflagefläche 22 hinausbewegt, so daß der Auslösehebel, welcher durch die Druckfeder 14 mit einem Öffnungsmoment vorbelastet ist, frei wird und den Kolben 20 sowie die Druckfeder 14 freigibt. Die Druckfeder 14 entspannt sich nun und zieht über das Zugseil 32 und das am Beschlag 36 angeschlossene Gurtschloß die Gurtlose aus dem Sicherheitsgurtsystem.

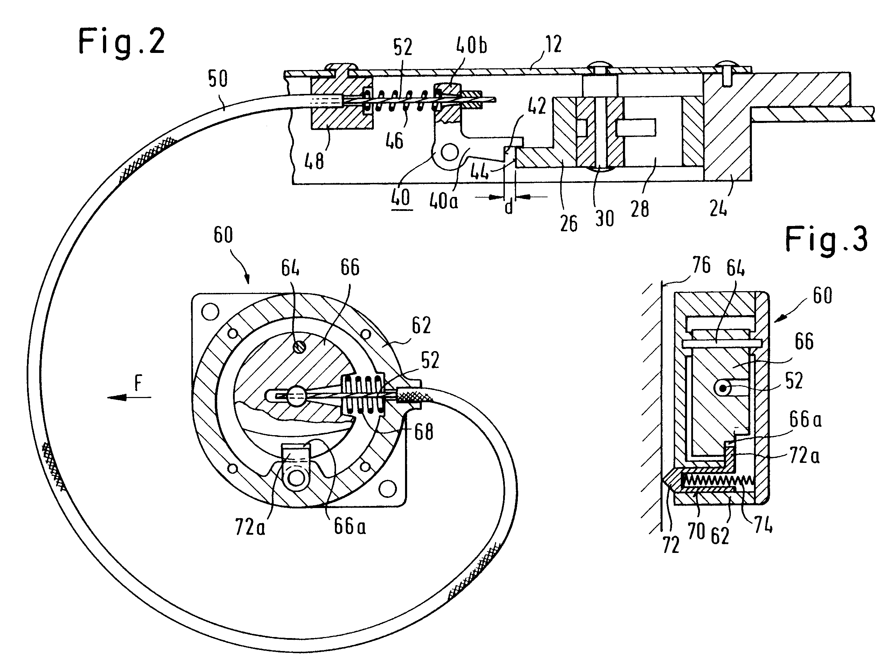

Der zur Sensormasse des Gurtstraffers gehörende Führungsblock 26 ist jedoch im normalen Betriebszustand des Fahrzeugs durch einen Verriegelungshebel 40, der an der Montageplatte 12 schwenkbar gelagert ist, gesichert. Dieser Verriegelungshebel 40 ist als zweiarmiger Winkelhebel ausgebildet und weist an seinem ersten Arm 40a eine Arretierfläche 42 auf, die einer Anschlagfläche 44 am benachbarten Ende des Führungsblocks 26 in einem Abstand d von einigen Millimetern gegenüberliegt. Wie aus Fig. 2 ersichtlich ist, liegt der Hebelarm 40a mit seinem freien Ende an einer Seitenfläche des Führungsblocks 26 auf, wodurch die Ruhestellung des Arretierhebels 40 definiert wird. In diese Ruhestellung wird der Arretierhebel 40 durch eine Druckfeder 46 belastet, die sich mit ihrem einen Ende an dem zweiten Hebelarm 40b des Arretierhebels 40 und mit ihrem anderen Ende an einem Stützblock 48 abstützt, der mit der Montageplatte 12 fest verbunden ist. An diesem Stützblock 48 ist auch die Außenhülle 50 eines Seilzugs abgestützt, dessen inneres Zugseil 52 von der Druckfeder 46 umgeben ist und an dem zweiten Hebelarm 40b angreift. Dieser Seilzug 50, 52 stellt eine Wirkverbindung zwischen der durch den Arretierhebel 40 gebildeten Verriegelungseinrichtung und einem Verzögerungssensor 60 her, der nun näher beschrieben wird.

Dieser Verzögerungssensor 60 besteht im wesentlichen aus einem am Fahrzeugaufbau zu befestigenden Gehäuse 62 und einer darin auf einem Stift 64 schwenkbar gelagerten Sensormasse 66. Die Außenhülle 50 des Seilzugs ist in einer Bohrung des Gehäuses 62 abgestützt. Das Zugseil 52 dieses Seilzugs erstreckt sich in das Innere des Gehäuses 62 hinein und ist an der Sensormasse 66 etwa in deren Mittelpunkt angeschlossen. Durch eine Druckfeder 68, die sich zwischen der Innenseite des Gehäuses 62 und der Sensormasse 66 abstützt, wird das Zugseil 52 gespannt gehalten und so auch die Ruhelage der Sensormasse 66 definiert. Es besteht also kein Spiel in dem Seilzug 50, 52, so daß eine durch Umlenkung des Seilzuges verursachte etwaige Verkürzung des Zugseils 52 relativ zur Außenhülle 50 selbsttätig ausgeglichen wird.

In einer axialen Bohrung 70 des Gehäuses 62 ist ein Taststift 72 verschiebbar gelagert. Dieser Taststift 72 wird durch eine Druckfeder 74 in solchem Sinne beaufschlagt, daß sein freies Ende aus dem Gehäuse 62 herausragt, solange dieses nicht an einer gegenüberliegenden Montagefläche 76 des Fahrzeugaufbaus angeschraubt ist. Der Tasthebel 72 ist an seinem inneren Ende mit einer Arretierfahne 72a versehen, die in eine Aussparung 66a der Sensormasse 66 eingreift, solange das freie Ende des Taststiftes 72 aus dem Gehäuse 62 herausragt. Nach erfolgter Montage des Gehäuses 62 an der gegenüberliegenden Montagefläche 76 des Fahrzeugaufbaus ist jedoch die Arretierfahne 72a aus der Ausnehmung 66a herausbewegt und gibt die Sensormasse 66 frei.

Es wird nun die Arbeitsweise des Gurtstraffers beschrieben. Im normalen Betriebszustand des Fahrzeugs ist der Gurtstraffer durch den Arretierhebel 40 gesichert. Seine Sensormasse, insbesondere der daran angeschlossene Führungsblock 26, kann sich nur so weit bewegen, bis seine Anschlagfläche 44 auf die gegenüberliegende Arretierfläche 42 am Hebelarm 40a des Arretierhebels 40 trifft. In diesem Zustand liegt das freie Ende am zweiten Hebelarm 18b des Auslösehebels 18 noch auf der Auflagefläche 22 auf. Eine Auslösung des Gurtstraffers ist daher nicht möglich. Da der Gurtstraffer über die Montageplatte 12 an einem Fahrzeugsitz befestigt ist, ist seine Sensormasse auch Verzögerungen ausgesetzt, die bei einer Sitzverstellung relativ zum Fahrzeugaufbau auftreten. Diese können aber niemals eine Auslösung des Gurtstraffers bewirken.

Eine Entsicherung des Gurtstraffers ist nur durch den Verzögerungssensor 60 möglich. Dieser spricht, da er am Fahrzeugaufbau befestigt ist, nur auf Fahrzeugverzögerungen an. Der Verzögerungssensor 60 ist im Fahrzeug beispielsweise unter dem Fahrzeugsitz so eingebaut, daß die normale Fahrtrichtung (Pfeil F in den Fig. 1 und 2) der Richtung entspricht, in welcher eine Verschwenkung der Sensormasse 66 einen Zug auf das Zugseil 52 ausübt. Dieser Zug wird über das Zugseil 52 auf den Hebelarm 40b des Arretierhebels 40 übertragen und bewirkt eine Verschwenkung dieses Arretierhebels 40 entgegen dem Uhrzeigersinn in Fig. 1, so daß sein Hebelarm 40a aus dem Weg der Anschlagfläche 44 am freien Ende des Führungsblocks 26 herausbewegt wird. Der Arretierhebel 40 behindert nun nicht mehr die Bewegung der Sensormasse des Gurtstraffers, so daß dieser entsichert ist.

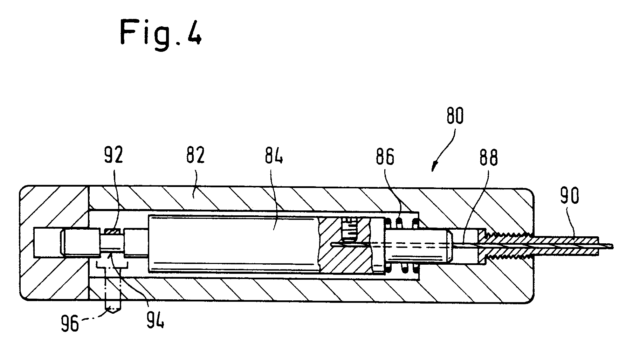

Voraussetzung dafür, daß die Sensormasse 66 sich in dem Gehäuse 62 bewegen kann, ist allerdings, daß der Taststift 72 vollständig in das Gehäuse 62 eingedrückt ist, dieses also an der Montagefläche 76 des Fahrzeugaufbaus befestigt ist. Andernfalls wird, wie in Fig. 3 schematisch dargestellt, die Sensormasse 66 durch die Arretierfahne 72a im Inneren des Gehäuses 62 festgehalten. Der Gurtstraffer ist also so lange gesichert, bis die Montage des Verzögerungssensors 60 am Fahrzeugaufbau abgeschlossen ist. Mittels des Arretierhebels 40 wird somit eine zweifache Sicherung des Gurtstraffers erreicht: eine Sicherung gegen Auslösung bei einer Sitzverstellung und eine Sicherung gegen Auslösung durch Stöße beim Transport, bei der Handhabung und Montage des Gurtstraffers vor der endgültigen Montage des Verzögerungssensors 60 am Fahrzeugaufbau.

Bei einer anderen Ausführungsform des Verzögerungssensors ist die Sensormasse nicht schwenkbar, sondern linearverschiebbar angeordnet. Ein in Fig. 4 gezeigter Verzögerungssensor 80 enthält ein am Fahrzeug zu befestigendes längliches Gehäuse 82, in dem eine Sensormasse 84 längs des Gehäuses 82 gleitverschiebbar gelagert ist. Zwischen der Innenseite des Gehäuses 82 und einem Ende der Sensormasse 84 stützt sich eine Druckfeder 86 ab, so daß ein an der Sensormasse 84 befestigtes Zugseil 88 eines Seilzugs 90 gespannt ist. Der Seilzug 90 führt zum Gurtstraffer 10 nach Fig. 1. Auch der Verzögerungssensor 80 ist mit einer Transport- und Montagesicherung ausgerüstet. Im arretierten Zustand greift an einem Ende am Gehäuse 84 befestigte Blattfeder 92 in eine einspringende Nut 94 am Umfang eins anderen Endes der Sensormasse 84. Ein Taststift 96 weist unbelastet aus dem Gehäuse 82 heraus und hebt nach der Montage die Blattfeder 92 aus der Nut 94, so daß die Sensormasse 84 entsichert ist.

Der Wert der Fahrzeugverzögerung, bei welchem die Entsicherung des Gurtstraffers erfolgt, wird deutlich niedriger als derjenige Verzögerungswert bemessen, bei welchem eine Auslösung des Gurtstraffers erfolgen soll. Je nach Fahrzeugtyp liegt die Auslöseschwelle für den Gurtstraffer beispielsweise bei etwa 4 bis 6 g; die Fahrzeugverzögerung, bei welcher eine Entsicherung des Gurtstraffers erfolgt, kann dann bei etwa 2 bis 3 g liegen. Der genaue Wert ist unkritisch; er soll nur um einen Sicherheitszuschlag größer sein als die maximale Bremsverzögerung des Fahrzeugs.

Der Schwellwert, bei dem die Entsicherung des Gurtstraffers durch den Verzögerungssensor 60 erfolgt, wird hauptsächlich durch die Dimensionierung der Druckfeder 46 bestimmt. Dieser wirkt allerdings die Druckfeder 68 entgegen, die erheblich schwächer dimensioniert werden kann.

Der beschriebene Gurtstraffer ist durch sehr einfache Mittel gegen jegliche Art von Fehlauslösung gesichert.

## Patentansprüche

1. Gurtstraffer (10) für Sicherheitsgurtsysteme in Fahrzeugen, bei denen das Gurtschloß an einem Fahrzeugsitz angeordnet ist und der Gurtstraffer (10) an diesem Gurtschloß angreift, mit einer fahrzeugsensitiven Sensormasse (16, 14, 18, 20, 26), die am Fahrzeugsitz beweglich gelagert ist, und einem durch deren fahrzeugsensitive Bewegung auslösbaren Antrieb (14, 20), wobei die Sensormasse (16, 14, 18, 20, 26) bis zum Auftreten eines ersten vorbestimmten Fahrzeug-Verzögerungswertes gesichert ist, der niedriger liegt als ein zweiter Fahrzeug-Verzögerungswert, bei dem die Auslösung des Antriebs (14, 20) durch die Bewegung der Sensormasse (16, 14, 18, 20, 26) erfolgt, und bei Überschreiten des ersten Fahrzeug-Verzögerungswertes entsichert ist, und wobei zur Entsicherung der Sensormasse (16, 14, 18, 20, 26) ein am Fahrzeugaufbau (76) befestigter Verzögerungssensor (60) vorgesehen ist, die Sensormasse (16, 14, 18, 20, 26) durch eine steuerbare Verriegelungseinrichtung (40) in ihrer gesicherten Stellung arretierbar ist und der Verzögerungssensor (60) mit der Verriegelungseinrichtung (40) in Wirkverbindung steht, um diese bei Überschreiten des ersten Fahrzeug-Verzögerungswertes umzusteuern und die Sensormasse (16, 14, 18, 20, 26) zu entsichern, dadurch gekennzeichnet, daß der Verzögerungssensor (60) ein am Fahrzeugaufbau zu befestigendes Gehäuse (62) und eine darin beweglich gelagerte Sensormasse (66) aufweist und daß die Sensormasse (66) des Verzögerungssensors (60) ihrerseits durch eine Montage-Sicherungseinrichtung (72a) in dem Gehäuse (62) arretiert ist, bis dieses am Fahrzeugaufbau (76) montiert ist.

2. Gurtstraffer nach Anspruch 1, dadurch gekennzeichnet, daß die Montage-Sicherungseinrichtung (72a) ein am Gehäuse (62) beweglich gelagertes Tastelement (70) aufweist, das bei der Montage des Gehäuses (62) am Fahrzeugaufbau (76) zur Anlage kommt und die Montage-Sicherungseinrichtung (72a) zur Aufhebung der Arretierung der Sensormasse (66) betätigt.

3. Gurtstraffer nach Anspruch 1 oder 2, dadurch gekennzeichnet, daß die Sensormasse (66) des Verzögerungssensors (60) über einen Seilzug (50, 52) mit der Verriegelungseinrichtung (40) verbunden ist.

4. Gurtstraffer nach einem der vorhergehenden Ansprüche, dadurch gekennzeichnet, daß zur Sicherung der Sensormasse (16, 14, 18, 20, 26) des Gurtstraffers (10) ein Arretierhebel (40) vorgesehen ist, der in seiner Ruhestellung die Sensormasse (16, 14, 18, 20, 26) sichert und eine Anschlagfläche (42) für die Sensormasse aufweist, welche bis zum Erreichen des ersten Fahrzeug-Verzögerungswertes im Abstand von einer gegenüberliegenden Anschlagfläche (44) der Sensormasse gelegen ist.

5. Gurtstraffer nach Anspruch 4, dadurch gekennzeichnet, daß der Arretierhebel (40) durch eine den ersten Fahrzeug-Verzögerungswert bestimmende Federkraft (46) in seine Ruhestellung vorbelastet ist.

6. Gurtstraffer nach den Ansprüchen 3 bis 5, dadurch gekennzeichnet, daß die Sensormasse (66) des Verzögerungssensors (60) durch eine Feder (68) in Richtung (F) der Bewegung der Sensormasse (66) bei Fahrzeugverzögerung vorbelastet ist.

7. Gurtstraffer nach einem der vorhergehenden Ansprüche, dadurch gekennzeichnet, daß die Sensormasse (66) des Verzögerungssensors (60) in dem Gehäuse (62) schwenkbar gelagert ist.

8. Gurtstraffer nach einem der Ansprüche 1 bis 6, dadurch gekennzeichnet, daß die Sensormasse (84) des Verzögerungssensors (80) in dem Gehäuse (82) linearverschiebbar gelagert ist.

## Claims

1. Belt tightener (10) for safety belt systems in vehicles in which the belt buckle is arranged on a vehicle seat and the belt tightener (10) engages said buckle, comprising a vehicle-sensitive sensor mass (16, 14, 18, 20, 26) which is movably mounted on the vehicle seat and a drive (14, 20) activatable by the vehicle-sensitive movement thereof, wherein the sensor mass (16, 14, 18, 20, 26) is secured until occurrence of a first predetermined vehicle deceleration value which is lower than a second vehicle deceleration value at which the activation of the drive (14, 20) by the movement of the sensor mass (16, 14, 18, 20, 26) takes place, and is unsecured when the first vehicle deceleration value is exceeded, and wherein for unsecuring the sensor mass (16, 14, 18, 20, 26) a deceleration sensor (60) secured to the vehicle bodywork (76) is provided, the sensor mass (16, 14, 18, 20, 26) is lockable in its secured position by a controllable locking means (40) and the deceleration sensor (60) is in operative connection with the locking means (40) to switch over the latter on exceeding the first vehicle deceleration value and unsecure the sensor mass (16, 14, 18, 20, 26), characterized in that the deceleration sensor (60) comprises a housing (62) to be secured to the vehicle bodywork and a sensor mass (66) mounted movably therein and that the sensor mass (66) of the deceleration sensor (60) is in turn arrested in the housing (62) by an assembly securing means (72a) until said housing is mounted on the vehicle bodywork (76).

2. Belt tightener according to claim 1, characterized in that the assembly securing means (72a) comprises a sensing element (70) which is movably mounted on the housing (62) and which on assembly of the housing (62) comes to bear on the vehicle bodywork (76) and actuates the assembly securing means (72a) to cancel the arresting of the sensor mass (66).

3. Belt tightener according to any one of claims 1 or 2, characterized in that the sensor mass (66) of the deceleration sensor (60) is connected via a sheated cable (50, 52) to the locking means (40).

4. Belt tightener according to any one of the preceding claims, characterized in that for securing the sensor mass (16, 14, 18, 20, 26) of the belt tightener (10) a locking lever (40) is provided which in its rest position secures the sensor mass (16, 14, 18, 20, 26) and has a stop face (42) for the sensor mass which until the first vehicle deceleration value is reached is disposed a distance away from an oppositely disposed stop face (44) of the sensor mass.

5. Belt tightener according to claim 4, characterized in that the locking lever (40) is biased into its rest position by a spring force (46) governing the first vehicle deceleration value.

6. Belt tightener according to claims 3 to 5, characterized in that the sensor mass (66) of the deceleration sensor (60) is biased by a spring (68) in the direction (F) of the movement of the sensor mass (66) on vehicle deceleration.

7. Belt tightener according to any one of the preceding claims, characterized in that the sensor mass (66) of the deceleration sensor (60) is pivotally mounted in the housing (62).

8. Belt tightener according to any one of claims 1 to 6, characterized in that the sensor mass (84) of the deceleration sensor (80) is mounted linearly displaceably in the housing (82).

## Revendications

1. Tendeur (10) de ceinture pour systèmes de ceinture de sécurité montés dans des véhicules et dont le verrou de la ceinture est monté sur un siège du véhicule et le tendeur (10) de ceinture agit sur ce verrou, tendeur comprenant une masse détectrice (16, 14, 18, 20, 26) qui répond au véhicule et qui est montée mobile sur le siège du véhicule, ainsi qu'une commande (14, 20) déclenchable par le mouvement de cette masse détectrice en réponse au véhicule, la masse détectrice (16, 14, 18, 20, 26) étant bloquée jusqu'à l'apparition d'une première décélération prédéterminée du véhicule qui est inférieure à une seconde décélération du véhicule à laquelle le déclenchement de la commande (14, 20) est produit par le mouvement de la masse détectrice (16, 14, 18, 20, 26), ladite masse détectrice étant débloquée en cas de dépassement de la première décélération du véhicule et un capteur de décélération (60) fixé à la carrosserie du véhicule (76) étant prévu pour le déblocage de la masse détectrice (16, 14, 18, 20, 26), la masse détectrice (16, 14, 18, 20, 26) étant immobilisable à sa position de blocage par un dispositif commandé de verrouillage (40) et le capteur de décélération (60) étant en relation fonctionnelle avec le dispositif de verrouillage (40) afin d'inverser ce dernier en cas de dépassement de la première décélération du véhicule et de débloquer la masse détectrice (16, 14, 20, 26), caractérisé en ce que le capteur de décélération (60) comprend un boîtier (62) se fixant sur la carrosserie du véhicule, ainsi qu'une masse détectrice (66) montée mobile dans ce dernier et en ce que la masse détectrice (66) du capteur de décélération (60) est immobilisée de son côté dans le boîtier (62) par un dispositif de blocage (72a) destiné au montage, jusqu'à ce que ce boîtier soit monté sur la carrosserie (76) du véhicule.

2. Tendeur de ceinture selon la revendication 1, caractérisé en ce que le dispositif de blocage (72a) destiné au montage comprend un élément palpeur (70) qui est monté mobile sur le boîtier (62), qui vient en appui lors du montage du boîtier (62) sur la carrosserie (76) du véhicule et qui actionne le dispositif de blocage (72a) destiné au montage afin de faire cesser le blocage de la masse détectrice (66).

3. Tendeur de ceinture selon la revendication 1 ou 2, caractérisé en ce que la masse détectrice (66) du capteur de décélération (60) est reliée au dispositif de verrouillage (40) par un câble de transmission (50, 52).

4. Tendeur de ceinture selon l'une des revendications précédentes, caractérisé en ce qu'un levier d'immobilisation (40) prévu pour bloquer la masse détectrice (16, 14, 18, 20, 26) du tendeur de ceinture (10) bloque la masse détectrice (16, 14, 18, 20, 26) à sa position de repos et comprend une surface de butée (42) destinée à cette masse détectrice et placée à distance d'une surface opposée de butée (44) de la masse détectrice jusqu'à ce que soit atteinte la première décélération du véhicule.

5. Tendeur de ceinture selon la revendication 4, caractérisé en ce que le levier d'immobilisation (40) est sous la précontrainte d'une force de ressort (46) le maintenant à sa position de repos et déterminant la première décélération du véhicule.

6. Tendeur de ceinture selon les revendications 3 à 5, caractérisé en ce que la masse détectrice (66) du capteur de décélération (60) est soumise à la précontrainte d'un ressort (68) dans le sens (F) du mouvement de la masse détectrice (66) en cas de décélération du véhicule.

7. Tendeur de ceinture selon l'une des revendications précédentes, caractérisé en ce que la masse détectrice (66) du capteur de décélération (60) est montée oscillante dans le boîtier (62).

8. Tendeur de ceinture selon l'une des revendications 1 à 6, caractérisé en ce que la masse détectrice (84) du capteur de décélération (80) est montée mobile linéairement dans le boîtier (82).
